# EUROPÄISCHE PATENTSCHRIFT

(11) **EP 2 658 739 B1**
(45) Veröffentlichungstag und Bekanntmachung des Hinweises auf die Patenterteilung: **22.02.2017**
(21) Anmeldenummer: 11778885.1
(22) Anmeldetag: 03.11.2011
(51) Int. Cl.: B60N 2/02, B60N 2/08, B60N 2/07

(54) **LÄNGSVERSTELLVORRICHTUNG EINES KRAFTFAHRZEUGSITZES MIT ZWEI SCHIENENPAAREN**
LONGITUDINAL ADJUSTMENT DEVICE FOR A MOTOR VEHICLE SEAT, COMPRISING TWO PAIRS OF RAILS
DISPOSITIF DE RÉGLAGE EN LONGUEUR D'UN SIÈGE DE VÉHICULE AUTOMOBILE MUNI DE DEUX PAIRES DE GLISSIÈRES

(30) Priorität: 30.12.2010 DE 102010064401
(43) Veröffentlichungstag der Anmeldung: 06.11.2013
(73) Patentinhaber: Johnson Controls Metals and Mechanisms GmbH & Co. KG, 42699 Solingen (DE)
(72) Erfinder: BENEKER, Wilfried, 42799 Leichlingen (DE); TEER, Antal, Millbrook, Alabama 36054 (US); BECKER, Burckhard, 42655 Solingen (DE)
(74) Vertreter: Bauer, Wulf
(86) Internationale Anmeldenummer: PCT/EP2011/069361
(87) Internationale Veröffentlichungsnummer: WO 2012/089373

(56) Entgegenhaltungen:
- EP-A1- 1 291 234
- DE-B- 1 068 129
- FR-A1- 2 530 557
- JP-U- H 075 894
- US-A- 3 841 696
- US-A- 5 348 373
- US-A1- 2007 236 039

## Beschreibung

Die Erfindung bezieht sich auf eine Längsverstellvorrichtung eines Kraftfahrzeugsitzes nach dem Oberbegriff des Anspruchs 1.

Eine derartige Längsverstellvorrichtung ist aus der US2007/0236039 A1 bekannt. Bei dieser Längsverstellvorrichtung ist ein als Hohlachsenmotor ausgeführter Elektromotor sowohl für den Antrieb der Längsverstellvorrichtung als auch für die Betätigung der Arretiereinrichtung jedes Schienenpaares zuständig. Bei Betätigung ausgehend von einer arretierten Position der beiden Schienenpaare dreht sich zunächst das Gehäuse des Elektromotors, es betätigt die beiden Arretiereinrichtungen. Anschließend dreht sich die Achse des Elektromotors und wird die Längsverstellung betätigt. Der Elektromotor ist zwischen zwei Teilenstücken der Achse angeordnet. Jedes Teilstück weist die am äußeren Ende jeweils ein Zahnrad auf, das mit einer Zahnstange kämmt, die jeweils mit einer Bodenschiene eines Schienenpaares verbunden ist.

Aus EP 1 291 234 A1 ist eine Längsverstellvorrichtung von Kraftfahrzeugsitzen bekannt, bei der die Arretiereinrichtungen beider Schienenpaare parallel über einen linear arbeitenden Aktuator betätigt werden. Seine Betätigungsrichtung liegt in der y-z-Ebene und ist etwa nach schräg vorn gerichtet.

Längsverstellvorrichtungen von Kraftfahrzeugsitzen sind üblicherweise entweder durch einen Elektromotor angetrieben, Beispiele hierfür sind aus den US-Patentschriften 4,802,374 A und 3,617,021 A ersichtlich, oder sie haben keinen eigenen Antrieb, sondern werden dadurch verstellt, dass ein Benutzer den Sitz nach vorne zieht oder nach hinten drückt. Die folgende Erfindung bezieht sich insbesondere auf den letzteren Fall, sie ist aber grundsätzlich auch bei elektromotorisch angetriebenen Längsverstellvorrichtungen einsetzbar.

Nach dem Stand der Technik haben die nicht angetriebenen Längsverstellvorrichtungen pro Schienenpaar eine eigene Arretiereinrichtung. Diese ist normalerweise im Arretierzustand. In diesem blockiert sie eine Längsverschiebung der Schienen des jeweiligen Schienenpaars gegeneinander. Über die Betätigungseinrichtung kann die Arretiereinrichtung in eine Freigabeposition gebracht werden, in dieser ist eine Längsverstellung der Schienen gegeneinander nicht möglich. Beispiele für Längsverstelleinrichtungen, die durch vom Benutzer eingeleitete Kraft längsverstellt werden können, finden sich in der DE 2 608 827 A1, der DE 100 57 724 B4, dort Figur 1 a und 2, und der WO 2009/132944.

Die JPH075894U zeigt eine Längsverstellvorrichtung mit den Merkmalen des Oberbegriffs des Anspruchs 1.

Bei Kraftfahrzeugsitzen ist man mehr und mehr bemüht, Platz zu sparen. Dies gilt insbesondere für den Platz unterhalb einer Sitzfläche. Man möchte den Sitz möglichst tief einbauen können, man möchte unterhalb der Sitzfläche Raum für unterschiedliche Aggregate und auch Sonderausstattungen zur Verfügung haben. Eine Betätigungseinheit benötigt im Allgemeinen viel Platz, der für andere Bauteile und Aggregate nicht mehr zur Verfügung steht.

Insbesondere bei Kraftfahrzeugsitzen, die durch Kippen ihrer Rückenlehne längsverschiebbar in der Längsverstellvorrichtung sind, kommt noch das Problem hinzu, dass diese Längsverstellung nicht durch die Handhabe ausgelöst wird, sondern durch Betätigen, z.B. Vorklappen der Rückenlehne. Für diese Freigabe der Arretiereinrichtungen sind mechanische Übertragungsmittel vorgesehen, die einen gewissen Aufwand darstellen. Gerade bei derartigen Sitzen, wie sie insbesondere bei Personenkraftwagen eingesetzt werden, die pro Fahrzeugseite nur eine Tür haben, besteht ein Bedürfnis dafür, die Betätigungseinheit zu vereinfachen.

In bekannter Weise weist jedes Schienenpaar eine Bodenschiene und eine Sitzschiene auf. Die Bodenschiene ist für die Befestigung an einer Bodengruppe eines Kraftfahrzeugs ausgelegt. Die Sitzschiene dient der Verbindung mit Bauteilen des Sitzes. Bodenschiene und Sitzschiene sind in einer Schienenlängsrichtung gegeneinander verschiebbar. Sie sind über Gleit- oder Rollkörper in Anlage miteinander. Die Bodenschiene hat üblicherweise eine Rastenleiste mit Rastfenstern und Raststegen, sie hat weiterhin mindestens einen Rastzahn, der in ein Rastfenster eingreifen kann und in Anlage an mindestens eine Raste gelangt, wodurch der Arretierzustand erreicht wird.

Arretiereinrichtungen sind heute zumeist mit zwei und mehreren Raststiften ausgerüstet. Von diesen sind im Arretierzustand nicht alle im Eingriff. Bei einem manuellen Betätigen der Betätigungseinheit kann es zu Fehlbedienungen kommen. Zu Fehlbedienungen kann es auch dadurch kommen, dass die Betätigungshebel der Betätigungseinheit zu stark beansprucht werden, beispielsweise eine zu große Kraft in sie eingeleitet wird, dies kann auch durch Vandalismus geschehen. Schließlich kann es vorkommen, dass die Handhabe einer Betätigungseinheit mechanisch durch einen Fremdkörper blockiert ist, wodurch die Funktion beeinträchtigt ist und die Arretiereinrichtungen entweder ständig freigegeben sind oder nicht freigegeben werden können, bevor nicht der Fremdkörper entfernt ist.

Aufgabe der Erfindung ist es, die Längsverstellvorrichtung der eingangs genannten Art dahingehend weiterzubilden und fortzuentwickeln, dass der Platzbedarf reduziert ist, sie insbesondere für Kraftfahrzeugsitze mit vielfältigen Eigenschaften, beispielsweise auch durch Kippen der Rückenlehne vorverlagerbare Kraftfahrzeugsitze geeignet ist und eine sichere Betätigung ermöglicht.

Diese Aufgabe wird gelöst durch eine Längsverstellvorrichtung mit den Merkmalen des Anspruchs 1. Die Betätigungseinheit weist vorzugsweise eine Einstelleinheit auf.

Bei dieser Längsverstellvorrichtung ist die Betätigungseinheit nicht mehr für manuell betätigte Freigabe der Arretiereinrichtungen ausgelegt, sondern arbeitet motorisch. Es entfällt eine üblicherweise groß ausgebildete Handhabe, in die eine ausreichend große Betätigungskraft eingeleitet werden kann und die sich zumeist unterhalb der Vorderkante des Fahrzeugsitzes befindet. An ihre Stelle tritt ein Taster oder ein entsprechendes elektrisches Bauelement, das beliebig platziert werden kann, da es nur elektrisch und nicht mechanisch angeschlossen ist. Eine Fehlbedienung mit zu viel Betätigungskraft oder zu wenig Betätigungskraft ist nun praktisch ausgeschlossen, da die korrekte Betätigungskraft jeweils durch den elektrischen Antriebsmotor zur Verfügung gestellt wird. Der Taster kann einfach gegen zu hohe Betätigungskraft geschützt werden. Es wird Bauraum gespart, denn die Betätigungseinheit kann nun kleiner ausgeführt werden. Der Antriebsmotor kann klein ausgebildet sein, es genügt ein Antriebsmotor, der weniger als 20% der Leistung eines Stellmotors der Längsverstellung hat und/oder der weniger als 1/3 des Volumens eines derartigen Stellmotors aufweist. Der Antriebsmotor treibt über das Getriebe einen Stellantrieb an. Dieser führt eine lineare Bewegung aus. Er wirkt auf die beiden Arretiereinrichtungen, genauer gesagt auf die Lösehebel.

Die Einstelleinheit ist dafür vorgesehen, die Betätigungseinheit so an eine individuelle Betätigungseinheit anpassen zu können, dass beide Arretiereinrichtungen sicher und zuverlässiger betätigt werden. Durch die Einstelleinheit werden insbesondere Ungenauigkeiten bei der Montage der einzelnen Bauteile, beispielsweise der beiden Schienenpaare, ausgeglichen.

In bevorzugter Weiterbildung hat die Betätigungseinheit mindestens ein Mittel zur Drehsicherung. Dieses Mittel zur Drehsicherung gewährleistet, dass der Stellantrieb nicht um seine Längsachse gegenüber den Arretiereinrichtungen schwenken kann. Üblicherweise wird der elektrische Antriebsmotor nur in einer Drehrichtung angetrieben, er muss lediglich die beiden Arretiereinrichtungen freiziehen können. Ein Schließen der Arretiereinrichtung ist mittels der Betätigungseinheit grundsätzlich möglich, wird aber üblicherweise durch Federn bewirkt. Gegen die Kraft dieser Federn erfolgt die Freigabe. Die Federn sichern eine Arretierung, sobald der Stellantrieb nicht mehr aktiv betätigt ist, also die Handhabe freigegeben ist. Die Handhabe ist üblicherweise als Betätigungshebel oder -bügel ausgebildet.

Vorzugsweise ist die Betätigungseinheit lediglich mit den beiden Arretiereinrichtungen, insbesondere deren Lösehebeln, mechanisch verbunden. Sonstige Befestigungen oder Abstützungen sind für die Betätigungseinheit nicht notwendig.

Die Kraft, die für ein Freigeben der Arretiereinrichtungen notwendig ist, variiert von Fall zu Fall. Befindet sich das Kraftfahrzeug in Schräglage, weist beispielsweise die Front des Fahrzeuges auf einer ansteigenden Straße schräg nach oben, wird der Sitz durch einen Benutzer nach hinten belastet und sind daher höhere Reibungskräfte zu überwinden als bei einem Fahrzeug, das auf einer ebenen Fläche steht. Häufig sind in Kraftfahrzeugen die Schienenpaare nicht horizontal eingebaut, sondern mit leichter Neigung nach hinten. Dies führt zu einer Kraftkomponente, die den Sitz nach hinten bewegen will. Diese kann in bekannter Weise durch eine Feder, die insbesondere als Zugfeder ausgebildet ist, und zwischen den Schienen des Schienenpaares angeordnet ist, kompensiert werden.

Eine Arretiereinrichtung weist üblicherweise einen Lösehebel auf. Er wird auch als Entriegelungsklappe bezeichnet. Er ist um eine Lösehebelachse schwenkbar. Diese sollte möglichst rechtwinklig, jedenfalls quer zur Längsrichtung des Stellantriebs verlaufen. Weiterhin sollte der Lösehebel im Arretierzustand möglichst im rechten Winkel zur Längsrichtung des Stellantriebs stehen, damit die volle Kraftkomponente des elektrischen Antriebsmotors in den Lösehebel eingeleitet werden kann.

Vorzugsweise sind die beiden Arretiereinrichtung spiegelbildlich zueinander ausgeführt, sie sind spiegelsymmetrisch zu einer Parallelen zur y-z-Ebene. Die Richtung der Kraft, die an dem Lösehebel einer Sitzseite angreift, um die dortige Arretiereinrichtung in die Freigabeposition zu ziehen, ist im Wesentlichen der Richtung der entsprechenden Kraft für die andere Sitzseite 180 Grad entgegen gerichtet. Die Richtung der Kraft, die an dem Lösehebel einer Sitzseite angreift, um die dortige Arretiereinrichtung in die Freigabeposition zu ziehen, ist zum anderen Schienenpaar hin gerichtet.

Die Anmelderin behält sich vor, beliebige Merkmale und Untermerkmale aus Satzteilen und/oder aus Ansprüchen, dort auch Teilmerkmale, in beliebiger Form miteinander zu kombinieren, auch wenn dies nicht ausdrücklich in der Beschreibung angegeben ist.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die unter Bezugnahme auf die Zeichnung im Folgenden näher erläutert werden. In dieser Zeichnung zeigen:
- Fig. 1:: eine perspektivische Darstellung einer Längsverstellvorrichtung mit angedeutetem Kraftfahrzeugsitz,
- Fig. 2:: eine prinzipielle Ansicht von vorne (ohne Rückenlehne) einer Längsverstellvorrichtung mit angedeutetem Sitz bei Blickrichtung parallel zur x-Achse, gezeigt ist der Arretierzustand,
- Fig. 3:: die Ansicht wie in Fig.2, jedoch ist nun die Freigabeposition gezeigt, und

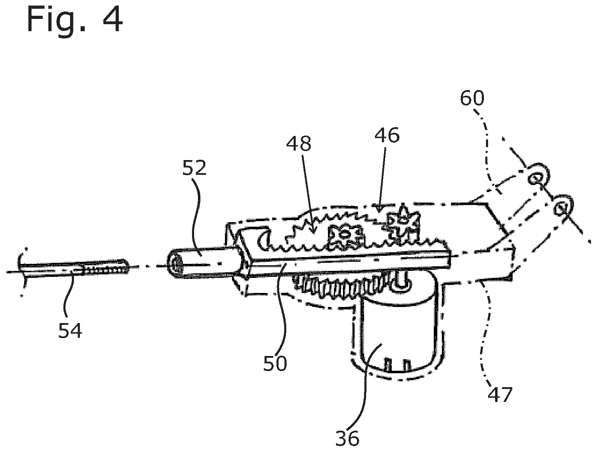

- Fig. 4:: eine perspektivische Darstellung, teilweise schnittbildlich, von wesentlichen Teilen des motorischen Antriebs.

Wie in der Kraftfahrzeugtechnik üblich, wird für die folgende Beschreibung ein x-,y-, z-rechtshändiges orthogonales Koordinatensystem verwendet. Die Längsverstellvorrichtung hat zwei Schienenpaare 20, die jeweils eine Bodenschiene und eine Sitzschiene aufweisen. Führungsmittel, wie beispielsweise Kugeln, sind nicht dargestellt. Jedem Schienenpaar 20 ist eine Arretiervorrichtung 22, 24 zugeordnet, wobei 22 die Arretiereinrichtung der rechten Sitzseite ist und 24 die Arretiereinrichtung der linken Sitzseite ist. Die beiden Sitzschienen tragen einen Fahrzeugsitz, der strichpunktiert dargestellt ist. Er hat einen Sitzbereich 26 und eine Rückenlehne 28.

Den beiden Arretiereinrichtungen 22, 24 ist eine gemeinsame Betätigungseinheit 30 zugeordnet. Sie befindet sich zwischen den beiden Arretiereinrichtungen 22, 24. Sie weist eine Handhabe 32 in Form eines elektrischen Tasters auf, der entsprechend dem Pfeil 34 betätigt, nämlich gedrückt werden kann. Sie weist weiterhin einen elektrischen Antriebsmotor 36 auf, der über Leitungen 38 einerseits mit der Handhabe 32 und andererseits mit Anschlussklemmen 40 elektrisch verbunden ist. An letzteren wird beispielsweise eine Batterie (nicht dargestellt) angeschlossen, es kann auch ein Steuergerät angeschlossen werden und dergleichen.

An der Rückenlehne 28 ist in einer Alternative ein Freigabehebel 42 für die Auslösung eines Vorklappens der Rückenlehne vorgesehen. Dieser muss nicht vorgesehen sein, er ist insbesondere für Kraftfahrzeuge mit nur einer Seitentür pro Fahrzeugseite vorhanden. Der Freigabehebel 42 hat eine elektrische Funktion, er wirkt als Taster. Er ist über eine gestrichelt dargestellte Zuleitung 44 parallel zur Handhabe 32 geschaltet. Er kann zusätzlich noch eine mechanische Funktion, wie beispielsweise Entriegelung eines Rückenlehnenbeschlags, aufweisen. Durch die gestrichelte Darstellung der Zuleitung 44 ist klargestellt, dass diese ebenso wie der Freigabehebel 42 nicht notwendigerweise vorhanden sein müssen.

Der Antriebsmotor 36 ist als Kleinstmotor ausgeführt. Er hat eine Leistung, die deutlich geringer ist als die üblicherweise für den Antrieb von Längsverstellvorrichtungen benutzten Elektromotoren, beispielsweise nur 1/3 dieser Leistung und weniger, vorzugsweise weniger als 15% dieser Leistung. Er ist auch vom Volumen her deutlich kleiner als ein derartiger Motor, wie er für die Längsverstellung eingesetzt wird, er hat ein Volumen, das kleiner als 50% eines derartigen Elektromotors ist, vorzugsweise kleiner als 25%. Für den Antriebsmotor 36 werden vorzugsweise hochtourige Kleinstmotoren eingesetzt. Die Umdrehungszahl kann oberhalb von 5.000 U/min, vorzugsweise oberhalb von 8.000 U/min liegen.

Dem Antriebsmotor 36 ist ein Getriebe 46 nachgeschaltet. Es weist mindestens eine Untersetzungsstufe auf. Es ist ausgangseitig mit einem Stellantrieb 48 verbunden, der hier als Zahnstangenantrieb ausgebildet ist. Konkret hat er ein Ritzel, das mit einer Zahnstange 50 in Eingriff ist und diese parallel zur y-Richtung bewegt. Die Verstellkraft liegt oberhalb von 100 N, vorzugsweise beträgt sie etwa 150 N. Das Getriebe 46 und der Stellantrieb 48 sind in einem gemeinsamen Gehäuse 47 untergebracht, vorzugsweise ist auch der Antriebsmotor 36 in diesem Gehäuse 47 untergebracht. Vorzugsweise sind zumindest die Teile des Stellantriebs 48 aus Kunststoff gefertigt. Auch das Gehäuse 47 kann aus Kunststoff gefertigt sein. Es ist möglich, auch das Getriebe 46 aus Kunststoff zu fertigen.

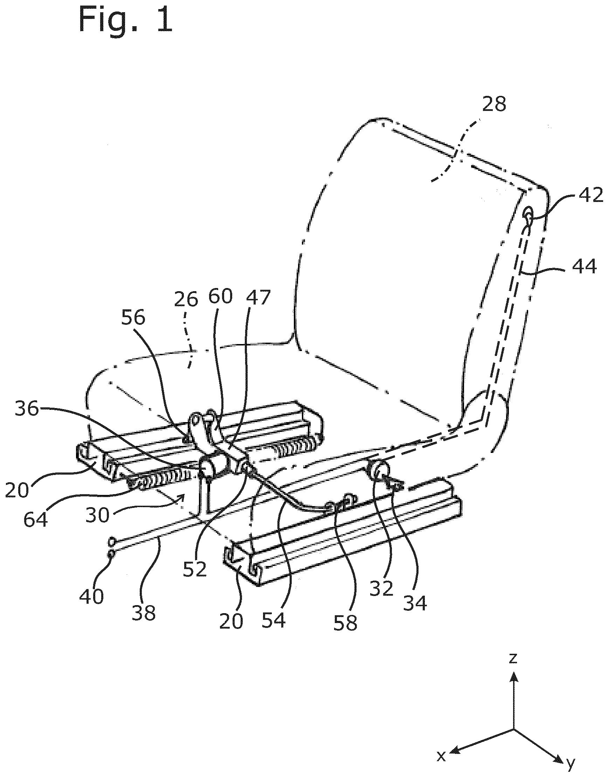

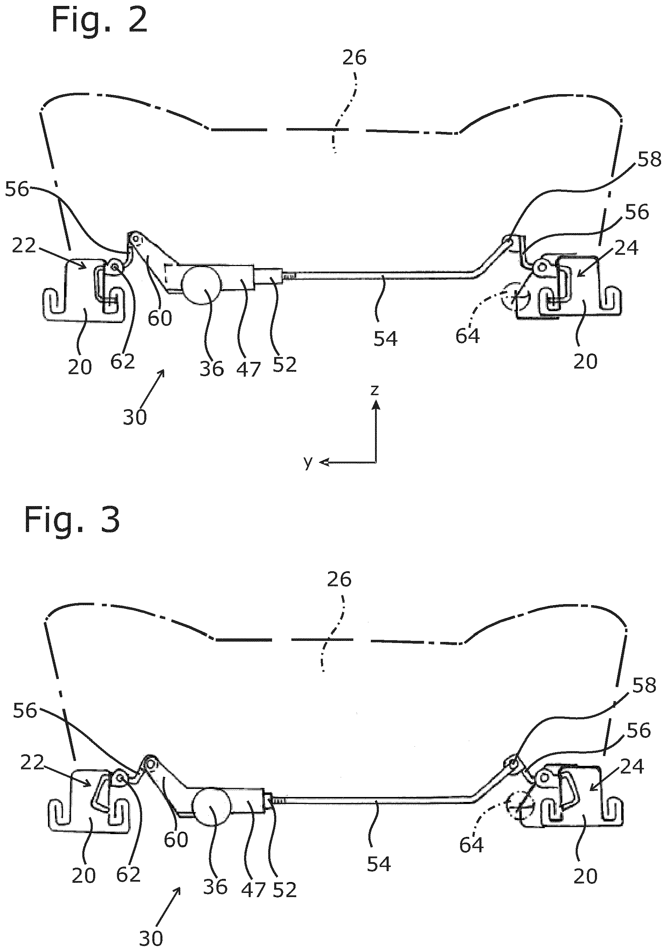

Die Zahnstange 50 ist in ihrer Verlängerung mit einem Stutzen 52 verbunden, der ein Innengewinde trägt. Mit ihm ist ein Stab 54 in Eingriff, der ein angepasstes Außengewinde hat. Er ist an seinem anderen Endbereich an einem Lösehebel 56 der linken Arretiereinrichtung 24 angelenkt. Der Stab 54 erstreckt sich im Wesentlichen parallel zur y-Achse. Wie aus Figur 2 ersichtlich ist, steht der Lösehebel 56 im gezeigten Arretierzustand praktisch lotrecht, er verläuft also parallel zur z-Achse. Der Antriebsmotor 36 befindet sich in einem Bereich zwischen den beiden Schienenpaaren 20. Dies gilt auch für den größten Teil des Stabes 54. Der Stab 54 hat in seinem linken Endbereich eine kurze Abwinklung schräg nach oben, die wiederum in ein Endstück 58 übergeht, das parallel zur x-Achse verläuft. Dieses Endstück ist zweifach im Lösehebel 56 gelagert, wie beispielsweise aus Figur 1 ersichtlich ist. Die Lagerpunkte liegen mehr als 10 mm voneinander entfernt. Hierdurch wird eine Sicherung gegen Drehmomente erreicht, der Stab 54 kann nicht um eine vom Stutzen 52 definierte Achse, die parallel zur y-Richtung ist, geschwenkt werden. Es wird somit eine Verdrehsicherung des Gewindeeingriffs von Stutzen 52 und Stab 54 erzielt.

Auf der rechten Sitzseite ist das Gehäuse 47 direkt mit dem Lösehebel 56 verbunden. Hierzu hat das Gehäuse ebenso wie die beschriebene Abwinklung des Stabes 54 zwei parallele Schrägarme 60, die jeweils an ihrem freien Ende eine Bohrung tragen. Durch diese ist ein Lagerstift gesteckt, der an zwei Lagerpunkten des Lösehebels 56 festgelegt ist. Die Lagerpunkte liegen mehr als 10 mm voneinander entfernt. Hierdurch wird eine Sicherung gegen Drehmomente erreicht. Somit wird ein Mittel zur Drehsicherung erreicht. Wiederum verläuft der Lösehebel 56 lotrecht, also parallel zur z-Achse.

Um die Freigabeposition, die in Fig. 3 dargestellt ist, zu erreichen, sind die Lösehebel 56 aufeinander zu bewegt worden. Sie befinden sich nunmehr nicht mehr in einer Ebene, die etwa (plusminus 5 bis plusminus 10 Grad) parallel zur x-z-Ebene ist, sondern sind in einer Winkelstellung von etwa 15 bis 30 Grad aus dieser Ebene verschwenkt. Der Stutzen 52 ist nun deutlich kürzer. Er ist in das Gehäuse 47 eingefahren.

Die Betätigungseinheit 30 arbeitet auf Zug. Der Antriebsmotor 36 bewegt die beiden Lösehebel 56 aufeinander zu, wenn eine Freigabeposition erreicht werden soll. Die Betätigungseinheit 30 führt eine lineare Bewegung parallel zur y-Achse aus, die sich über mindestens das Zweifache des für die Freigabe einer Arretiereinrichtung notwendigen Weges erstreckt. In der Praxis ist es so, dass bei einem Start der Betätigungseinheit 30 diese zuerst die Arretiereinrichtung einer Sitzseite und erst danach die Arretiereinrichtung der anderen Sitzseite freizieht. Die Betätigungseinheit 30 muss nur dahingehend mechanisch ausgelegt sein, dass sie die Arretiereinrichtung einer Sitzseite freiziehen kann. Konkret muss sie in der Lage sein, die Arretiereinrichtung derjenigen Sitzseite freizuziehen, die die höhere Kraft für eine Freigabe benötigt.

Es ist möglich, dass die Betätigungseinheit 30 auf Druck arbeitet. Sie kann auch mit einer Kurvenbewegung arbeiten.

Wie Figur 2 und 3 zeigen, ist der Lösehebel 56 jeweils um eine Lösehebelachse 62 schwenkbar gelagert, diese ist von Bauteilen, die von der Sitzschiene gebildet sind oder wegstehen, gehalten. Die beiden Lösehebelachsen 62 einer Längsverstellvorrichtung sind parallel. Im gezeigten Ausführungsbeispiel geht der Lösehebel 56 einstückig über in einen Arretierhebel, der die Arretierung bewirkt, wie ein Vergleich der Figuren 2 und 3 zeigt. Er weist mindestens einen Raststift bzw. eine Rastklaue auf.

Wie ein Vergleich der beiden Fig. 2 und 3 zeigt, wird der Lösehebel 56 etwa um einen Winkel von 10 bis 30 Grad verschwenkt, um in die Freigabeposition zu gelangen. Durch Verstellung zwischen dem Stutzen 52 und dem Stab 54 ist eine exakte Anpassung und Einstellung möglich. Diese beiden Teile 52 und 54 bilden eine Einstelleinheit. Wie insbesondere die Figuren 2 und 3 zeigen, ist das Gehäuse 47 frei gelagert, die Befestigung der Betätigungseinheit erfolgt lediglich an den beiden Lösehebeln 56. Es ist also keine zusätzliche Befestigung an einer Taverse, an einer Sitzschiene oder dergleichen notwendig.

Die Schrägarme 60 sind vorzugsweise einstückige Teile des Gehäuses 47. Der Stellantrieb 48 kann auch in anderer Weise realisiert werden, beispielsweise über einen Exzenterantrieb, einen Spindelantrieb oder dergleichen. Die Auslegung und Realisierung von Antriebsmotor 36, Getriebe 46 und Stellantrieb 48 mit Zahnstange 50 ist in der Kraftfahrzeugtechnik bekannt, sie wird beispielsweise für Türöffner in einem Kraftfahrzeug benutzt. Diese Baueinheit kann nun auch im Sitzbereich verwendet werden, zumindest können Teile von ihr, z.B. der Motor, eingesetzt werden.

Aus den Figuren 1 bis 3 ist noch eine Feder 64 ersichtlich, die in Fig. 1 parallel zum rechten Schienenpaar 20 angeordnet ist. In den Fig. 2 und 3 ist sie jedoch parallel zum linken Schienenpaar 20 angeordnet. Sie ist optional. Sie belastet die beiden Schienen dieses Schienenpaars in Längsrichtung gegeneinander. In der Darstellung gemäß Figur 1 ist die x-y-Ebene diejenige Ebene, in der die beiden Schienenpaare 20 angeordnet sind. Die Ebene der Schienenpaare und die x-y-Ebene sind parallel. Ordnet man nun aber alternativ die Schienenpaare schräg im Fahrzeug an, so dass die Ebene der Schienenpaare 20 in einem Winkel zur x-y-Ebene verläuft, so kommt es zu einer Kraftkomponenten in x-Richtung bei Belastung des Fahrzeugsitzes. Diese Kraftkomponente wird durch die Feder 64, die an mindestens einer Sitzseite vorgesehen ist, kompensiert.

Die x-y-Ebene ist die horizontale Fahrebene, die z-Richtung ist senkrecht hierzu. Die positive x-Richtung ist die normale Fahrtrichtung geradeaus des Kraftfahrzeugs.

Vorzugsweise ist der Fahrzeugsitz durch Kippen seiner Rückenlehne 28 längsverschiebbar. Es ist ein Taster (nicht dargestellt) vorgesehen, mit dem ein Stromkreis des Antriebsmotors 36 geschlossen werden kann. Der Taster ist im Bewegungsbereich der Rückenlehne 28 angeordnet. Er wird betätigt und der Stromkreis wird geschlossen, wenn die Rückenlehne 28 ausgehend von der Normalposition um einen vorgegebenen Schwenkwinkel nach vorn geschwenkt wurde.

## Patentansprüche

1. Längsverstellvorrichtung eines Kraftfahrzeugsitzes, die zwei Schienenpaare (20), pro Schienenpaar (20) jeweils eine Arretiereinrichtung, nämlich die Arreitereinrichtung der linken Sitzseite und die Arretiereinrichtung der rechten Sitzseite, und eine gemeinsame Betätigungseinheit (30) der beiden Arretiereinrichtungen (22, 24) aufweist, welche mit beiden Arretiereinrichtungen (22, 24) zusammenwirkt und eine Handhabe (32) aufweist, die Betätigungseinheit (30) einen elektrischen Antriebsmotor (36), ein Getriebe (46), das mit diesem elektrischen Antriebsmotor (36) verbunden ist und einen Stellantrieb (48) aufweist, wobei die Betätigungseinheit (30) auf Zug arbeitet, der Stellantrieb (48) eine lineare Bewegung ausführt, und die lineare Bewegung parallel zur y-Achse ist,
**dadurch gekennzeichnet, dass** sich die lineare Bewegung über mindestens das Zweifache des für die Freigabe einer Arretiereinrichtung (22, 24) notwendigen Weges erstreckt und dadurch dass die Betätigungseinrichtung zuerst die Arretiereinrichtung einer Sitzseite und erst danach die Arretiereinrichtung der anderen Sitzseite freizieht.

2. Längsverstellvorrichtung nach Anspruch 1, **dadurch gekennzeichnet, dass** die Betätigungseinheit (30) eine Einstelleinheit aufweist.

3. Längsverstellvorrichtung nach einem der vorangegangenen Ansprüche,
**dadurch gekennzeichnet, dass** die Betätigungseinheit (30) mechanisch lediglich mit den beiden Arretiereinrichtungen (22, 24) und nicht über weitere Halterungen gehalten und befestigt ist.

4. Längsverstellvorrichtung nach einem der vorangegangenen Ansprüche,
**dadurch gekennzeichnet, dass** bei Schienenpaaren (20), die in einem Fahrzeug nicht horizontal, sondern in einem Winkel zur x-y-Ebene und damit zur Horizontalebene eingebaut sind, eine in Längsrichtung des Schienenpaars (20) wirkende Feder (64) vorgesehen ist, die die anteilige Belastung in Längsrichtung durch einen Passagier mit Normalgewicht im Wesentlichen kompensiert.

5. Längsverstellvorrichtung nach einem der vorangegangenen Ansprüche,
**dadurch gekennzeichnet, dass** die Arretiereinrichtungen (22, 24) jeweils einen Lösehebel (56) aufweisen, der um eine Lösehebelachse (62) schwenkbar ist, und dass die Lösehebelachse (62) im Wesentlichen rechtwinklig zur Zugrichtung der Betätigungseinheit (30) angeordnet ist.

6. Längsverstellvorrichtung nach einem der vorangegangenen Ansprüche,
**dadurch gekennzeichnet, dass** die Arretiereinrichtungen (22, 24) jeweils einen Lösehebel (56) aufweisen, dass der Lösehebel (56) im verriegelten Zustand der Arretiereinrichtung (22, 24) mit einer Betätigungseinrichtung der Betätigungseinheit (30) einen Winkel einschließt, der möglichst nahe an 90° ist, insbesondere zwischen + 60 und - 60°, vorzugsweise + 75 und - 75° liegt.

7. Längsverstellvorrichtung nach einem der vorangegangenen Ansprüche,
**dadurch gekennzeichnet, dass** die Betätigungseinheit (30) mit mindestens einem Lösehebel (56) über eine Strecke von mindestens 10 mm, vorzugsweise 20 mm gelenkverbunden ist, wodurch eine Verdrehsicherung geschaffen ist.

8. Längsverstellvorrichtung nach einem der vorangegangenen Ansprüche,
**dadurch gekennzeichnet, dass** der elektrische Antriebsmotor (36) über einen Taster an eine Spannungsquelle angeschlossen ist, dass der Taster die Handhabe (32) bildet, und dass der Taster solange betätigt wird, wie eine Verstellung der Position der Längsverstellvorrichtung gewünscht ist.

9. Längsverstellvorrichtung nach einem der vorangegangenen Ansprüche,
**dadurch gekennzeichnet, dass** der elektrische Antriebsmotor (36) näher an einem Schienenpaar (20) angeordnet ist, als an dem anderen Schienenpaar (20), wobei der Abstand zu dem anderen Schienenpaar (20) größer als 2/3 des Abstandes der beiden Schienenpaar (20) ist.

10. Längsverstellvorrichtung nach einem der vorangegangenen Ansprüche,
**dadurch gekennzeichnet, dass** die Lösehebel (56) beider Sitzseiten gegensinnig betätigbar sind, insbesondere dass sie zu einer Spiegelebene symmetrisch betätigbar sind, wobei die Spiegelebene parallel zur x-z-Ebene ist.

11. Längsverstellvorrichtung nach Anspruch 5, **dadurch gekennzeichnet, dass**
der Antriebsmotor (36) die beiden Lösehebel (56) aufeinander zu bewegt, wenn eine Freigabeposition erreicht werden soll.

12. Längsverstellvorrichtung nach Anspruch 5, **dadurch gekennzeichnet, dass**
die Richtung der Kraft, die an dem Lösehebel (56) einer Sitzseite angreift, um die dortige Arretiereinrichtung (22, 24) in die Freigabeposition zu ziehen, zum anderen Schienenpaar (20) hin gerichtet ist.

## Claims

1. A longitudinal adjustment device for a motor vehicle seat, which comprises two pairs (20) of rails, one locking device for each pair (20) of rails, namely the locking device of the left-hand seat side and the locking device of the right-hand seat side, and a common actuating unit (30) for the two locking devices (22, 24) that cooperates with the two locking devices (22, 24) and has a handling means (32), the actuating unit (30) comprises an electric drive motor (36), a gear unit (46) connected to this electric drive motor (36), and an actuator (48), wherein the actuating unit (30) exerts a pull, the actuator (48) carries out a linear movement, and the linear movement is parallel to the y-axis, **characterized in that** the linear movement extends over at least twice the distance required for releasing a locking device (22, 24), and **in that** the actuating device first pulls the locking device of one seat side free, and only then the locking device of the other seat side.

2. The longitudinal adjustment device according to claim 1, **characterized in**
**that** the actuating unit (30) has a setting unit.

3. The longitudinal adjustment device according to any one of the preceding claims, **characterized in that** the actuating unit (30) is mechanically retained and fastened only with the two locking devices (22, 24), and not via further retaining means.

4. The longitudinal adjustment device according to any one of the preceding
claims, **characterized in that** in the case of pairs (20) of rails installed in a vehicle not horizontally, but at an angle to the x-y plane, and thus to the horizontal plane, a spring (64) acting in the longitudinal direction of the pair (20) of rails is provided which substantially compensates the proportion of the load in the longitudinal direction due to a passenger with normal weight.

5. The longitudinal adjustment device according to any one of the preceding
claims, **characterized in that** the locking devices (22, 24) each comprise a disengagement lever (56) pivotable about a disengagement lever axis (62), and that the disengagement lever axis (62) is disposed substantially at right angles to the pulling direction of the actuating unit (30).

6. The longitudinal adjustment device according to any one of the preceding
claims, **characterized in that** the locking devices (22, 24) each comprise a disengagement lever (56), that the disengagement lever (56), in the locked state of the locking device (22, 24), includes with an actuating device of the actuating unit (30) an angle which is as close as possible to 90°, in particular is between + 60 and - 60°, preferably between + 75 and - 75°.

7. The longitudinal adjustment device according to any one of the preceding
claims, **characterized in that** the actuating unit (30) is hinged to at least one disengagement lever (56) over a distance of at least 10 mm, preferably 20 mm, whereby an anti-rotation protection is created.

8. The longitudinal adjustment device according to any one of the preceding
claims, **characterized in that** the electric drive motor (36) is connected to a power source via a button, that the button forms the handling means (32), and that the button is actuated for so long as an adjustment of the position of the longitudinal adjustment device is desired.

9. The longitudinal adjustment device according to any one of the preceding
claims, **characterized in that** the electric drive motor (36) is disposed closer to one pair (20) of rails than to the other pair (20) of rails, the distance to the other pair (20) of rails being greater than 2/3 of the distance of the two pairs (20) of rails.

10. The longitudinal adjustment device according to any one of the preceding
claims, **characterized in that** the disengagement levers (56) of the two seat sides can be actuated counter-directionally, in particular that they can be actuated symmetrically to a mirror plane, the mirror plane being parallel to the x-z plane.

11. The longitudinal adjustment device according to claim 5, **characterized in**
**that** the drive motor (36) moves the two disengagement levers (56) towards each other if a release position is to be achieved.

12. The longitudinal adjustment device according to claim 5, **characterized in**
**that** the direction of the force that acts on the disengagement lever (56) of a seat side in order to pull the locking device (22, 24) there into the release position is directed towards the other pair (20) of rails.

## Revendications

1. Dispositif de réglage longitudinal d'un siège de véhicule automobile, comprenant deux paires de rails (20), par paire de rails (20) respectivement un dispositif d'arrêt, à savoir le dispositif d'arrêt du côté gauche de siège et le dispositif d'arrêt du côté droit de siège, et une unité de commande (30) commune des deux dispositifs d'arrêt (22, 24), laquelle agit de concert avec les deux dispositifs d'arrêt (22, 24) et présente une manette (32), ladite unité de commande (30) présente un moteur électrique d'entraînement (36), un engrenage (46) qui est relié à ce moteur électrique d'entraînement (36) et un actionneur (48), dans lequel ladite unité de commande (30) travaille à la traction, ledit actionneur (48) effectue un mouvement linéaire et le mouvement linéaire est parallèle à l'axe y, **caractérisé par le fait que** le mouvement linéaire s'étend sur au moins deux fois le chemin nécessaire à libérer un dispositif d'arrêt (22, 24), et **par le fait que** le dispositif de commande libère par traction d'abord le dispositif d'arrêt d'un côté du siège et ne libère qu'ensuite par traction le dispositif d'arrêt de l'autre côté du siège.

2. Dispositif de réglage longitudinal selon la revendication 1, **caractérisé par le fait que** ladite unité de commande (30) présente une unité de réglage.

3. Dispositif de réglage longitudinal selon l'une quelconque des revendications précédentes, **caractérisé par le fait que** l'unité de commande (30) est maintenue et fixée mécaniquement uniquement par les deux dispositifs d'arrêt (22, 24) et non pas par d'autres supports.

4. Dispositif de réglage longitudinal selon l'une quelconque des revendications précédentes, **caractérisé par le fait que**, dans le cas de paires de rails (20) qui ne sont pas montées horizontalement, mais sont montées à un angle par rapport au plan x-y et ainsi au plan horizontal dans un véhicule, on prévoit un ressort (64) agissant dans la direction longitudinale de la paire de rails (20) lequel compense pour l'essentiel la charge proportionnelle dans la direction longitudinale due à un passager ayant un poids normal.

5. Dispositif de réglage longitudinal selon l'une quelconque des revendications précédentes, **caractérisé par le fait que** les dispositifs d'arrêt (22, 24) présentent chacun un levier de libération (56) qui peut pivoter autour d'un axe de levier de libération (62), et que l'axe de levier de libération (62) est disposé pour l'essentiel à angle droit par rapport à la direction de traction de l'unité de commande (30).

6. Dispositif de réglage longitudinal selon l'une quelconque des revendications précédentes, **caractérisé par le fait que** les dispositifs d'arrêt (22, 24) présentent chacun un levier de libération (56), que, en état verrouillé du dispositif d'arrêt (22, 24), le levier de libération (56) et un dispositif de commande de l'unité de commande (30) forment un angle entre eux qui est aussi proche que possible de 90°, en particulier compris entre + 60 et - 60°, de préférence + 75 et - 75°.

7. Dispositif de réglage longitudinal selon l'une quelconque des revendications précédentes, **caractérisé par le fait que** l'unité de commande (30) est reliée de manière articulée à au moins un levier de libération (56) sur une distance d'au moins 10 mm, de préférence de 20 mm, une protection anti-rotation étant créée ainsi.

8. Dispositif de réglage longitudinal selon l'une quelconque des revendications précédentes, **caractérisé par le fait que** le moteur électrique d'entraînement (36) est connecté par un bouton-poussoir à une source de tension, que le bouton-poussoir forme ladite manette (32) et que le bouton-poussoir est actionné tant qu'un réglage de la position du dispositif de réglage longitudinal est souhaité.

9. Dispositif de réglage longitudinal selon l'une quelconque des revendications précédentes, **caractérisé par le fait que** le moteur électrique d'entraînement (36) est disposé plus près d'une paire de rails (20) que de l'autre paire de rails (20), dans lequel la distance par rapport à l'autre paire de rails (20) est supérieure à 2/3 de la distance des deux paires de rails (20).

10. Dispositif de réglage longitudinal selon l'une quelconque des revendications précédentes, **caractérisé par le fait que** les leviers de libération (56) des deux côtés du siège peuvent être actionnés en sens opposé, en particulier qu'ils peuvent être actionnés de manière symétrique par rapport à un plan de réflexion, ledit plan de réflexion étant parallèle au plan x-z.

11. Dispositif de réglage longitudinal selon la revendication 5, **caractérisé par le fait que** le moteur d'entraînement (36) déplace les deux leviers de libération (56) en les rapprochant l'un de l'autre lorsqu'une position de libération doit être atteinte.

12. Dispositif de réglage longitudinal selon la revendication 5, **caractérisé par le fait que** la direction de la force qui est appliqué sur le levier de libération (56) d'un côté du siège afin de tirer dans la position de libération le dispositif d'arrêt (22, 24) y situé est dirigée vers l'autre paire de rails (20).
